# EUROPEAN PATENT APPLICATION

(11) **EP 4 742 713 A1**
(43) Date of publication of application: **13.05.2026**
(21) Application number: 23944026.6
(22) Date of filing: 05.07.2023
(51) Int. Cl.: H04W 8/14

(54) **COMMUNICATION METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LIANG, Haoran, Beijing 100085 (CN); LU, Wei, Beijing 100085 (CN)
(74) Representative: Dehns Germany Partnerschaft mbB
(86) International application number: PCT/CN2023/105869
(87) International publication number: WO 2025/007295

(57) **Abstract**

Embodiments of the present disclosure provide a communication method and apparatus, a communication device, a communication system, and a storage medium. The method comprises: sending a first NAI to a network device, wherein the first NAI comprises first information and second information, the first information is used for indicating a first domain corresponding to the network device, the second information is used for indicating a second domain corresponding to a credentials holder of a terminal, and the first domain is an NPN. The technical solution provided by the embodiments of the present disclosure can achieve NSWO when a credentials holder and WLAN-AN are located in different domains.

## Description

### TECHNICAL FIELD

The present disclosure relate to the field of communication technologies, and in particular to a communication method and apparatus, a communication device, a communication system and a storage medium.

### BACKGROUND

In the field of communication technologies, non-seamless wireless local area network offload (NSWO) enables terminals to access access networks in Non-Public Networks (NPNs) without requiring the access networks to register with fifth-generation systems (5GSs). During the NSWO, the terminals and the NPNs can realize mutual authentication based on the shared key.

### SUMMARY

In an NPN scenario, if the NPN and a Credential Holder (CH) of a terminal are in different realms, an access network in the NPN needs to route authentication-related messages from the terminal to the credential holder.

Embodiments of the present disclosure provide a communication method and apparatus, a communication device, a communication system, and a storage medium.

According to a first aspect of embodiments of the present disclosure, there is provided a communication method, which is performed by a terminal and includes: sending a first Network Access Identifier (NAI) to a network device; wherein the first NAI includes first information and second information, the first information is configured to indicate a first realm corresponding to the network device, the second information is configured to indicate a second realm corresponding to a credential holder of the terminal, and the first realm is an NPN.

According to a second aspect of embodiments of the present disclosure, there is provided a communication method, which is performed by a network device and includes: receiving a first NAI from a terminal; wherein the first NAI includes first information and second information, the first information is configured to indicate a first realm corresponding to the network device, the second information is configured to indicate a second realm corresponding to a credential holder of the terminal, and the first realm is an NPN.

According to a third aspect of embodiments of the present disclosure, there is provided a communication apparatus, which is provided in a terminal and includes: a sending module, configured to send a first NAI to a network device; wherein the first NAI includes first information and second information, the first information is configured to indicate a first realm corresponding to the network device, the second information is configured to indicate a second realm corresponding to a credential holder of the terminal, and the first realm is an NPN.

According to a fourth aspect of embodiments of the present disclosure, there is provided a communication apparatus, which is provided in a network device and includes: a receiving module, configured to receive a first NAI from a terminal; wherein the first NAI includes first information and second information, the first information is configured to indicate a first realm corresponding to the network device, the second information is configured to indicate a second realm corresponding to a credential holder of the terminal, and the first realm is an NPN.

According to a fifth aspect of embodiments of the present disclosure, there is provided a communication device, which includes at least one processor. The processor is configured to invoke instructions to execute the communication method as described in the first or second aspect.

According to a sixth aspect of embodiments of the present disclosure, there is provided a communication system, which includes a terminal and a network device. The terminal is configured to implement the communication method as described in the first aspect. The network device is configured to implement the communication method as described in the second aspect.

According to a seventh aspect of embodiments of the present disclosure, there is provided a storage medium having instructions stored. The instructions, when executed by a processor, perform the communication method as described in the first or second aspect.

According to an eighth aspect of embodiments of the present disclosure, there is provided a computer program or computer program product. The computer program or computer program product includes codes. Instructions, when executed by a processor, perform the communication method as described in the first or second aspect.

According to the embodiments of the present disclosure, the first NAI sent by the terminal to the network device includes both the first information and the second information. The first information indicates the realm corresponding to the network device, and the second information indicates the realm corresponding to the credential holder of the terminal. The network device obtains, based on the received first NAI, the realm corresponding to the network device and the realm corresponding to the credential holder, thereby enabling it to route the authentication-related information from the terminal to the credential holder. In this way, the authentication of the NPN in the first realm can be completed at the credential holder in the second realm, achieving NSWO.

It should be understood that the foregoing general description and the following detailed description are exemplary and explanatory only and do not constitute limitations on the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the embodiments of the present disclosure.
FIG. 1 is a schematic diagram of the architecture of a communication system provided according to an embodiment of the present disclosure.
FIG. 2 is a schematic diagram of a specific NSWO architecture of a communication system provided according to an embodiment of the present disclosure.
FIG. 3 is a schematic interactive diagram of a communication method provided according to an embodiment of the present disclosure.
FIG. 4 is a schematic flowchart of a communication method provided according to an embodiment of the present disclosure.
FIG. 5 is a schematic flowchart of a communication method provided according to an embodiment of the present disclosure.
FIG. 6 is a schematic interactive diagram of a communication method provided according to an embodiment of the present disclosure.
FIG. 7 is a schematic interactive diagram of a communication method provided according to an embodiment of the present disclosure.
FIG. 8 is a schematic structural diagram of a communication apparatus provided according to an embodiment of the present disclosure.
FIG. 9 is a schematic structural diagram of a communication apparatus provided according to an embodiment of the present disclosure.
FIG. 10 is a schematic structural diagram of a communication device provided according to an embodiment of the present disclosure.

### DETAILED DESCRIPTION

Embodiments of the present disclosure provide a communication method and apparatus, a communication device, a communication system, and a storage medium.

In a first aspect, embodiments of the present disclosure provide a communication method, which is performed by a terminal and includes: sending a first NAI to a network device. The first NAI includes first information and second information, the first information is configured to indicate a first realm corresponding to the network device, and the second information is configured to indicate a second realm corresponding to a credential holder of the terminal. The first realm is an NPN.

According to embodiments of the present disclosure, the first NAI sent by the terminal to the network device includes both the first information and the second information. The first information indicates the realm corresponding to the network device, and the second information indicates the realm corresponding to the credential holder of the terminal. The network device obtains, based on the received first NAI, the realm corresponding to the network device and the realm corresponding to the credential holder, thereby enabling it to route the authentication-related information from the terminal to the credential holder. In this way, the authentication of the NPN in the first realm can be completed at the credential holder in the second realm, achieving NSWO.

In conjunction with some embodiments of the first aspect, in some embodiments, the second realm may be one of the following types: a PLMN, an NPN, or a realm to which an AAA server belongs.

In conjunction with some embodiments of the first aspect, in some embodiments, the first NAI may satisfy the following format: CHrealm!username@NPNrealm; where CHrealm represents the second information, username represents a username, NPNrealm represents the first information, and CHrealm, username and NPNrealm are separated by ! and @.

According to embodiments of the present disclosure, for NSWO in the NPN, the second information of the realm corresponding to the credential holder is added on the basis of the existing NAI format, which allows for the inclusion of both the information of the first realm where the NPN is located and the information of the second realm where the credential holder is located, on the basis of minimal modifications to the NAI format in the existing standards.

In conjunction with some embodiments of the first aspect, in some embodiments, the first information may include a first NID, a first MNC and a first MCC of the first realm.

In conjunction with some embodiments of the first aspect, in some embodiments, the second realm may be a PLMN. The second information may include a second MNC and a second MCC of the second realm.

In conjunction with some embodiments of the first aspect, in some embodiments, the second realm may be a PLMN. The second information may satisfy the following format: 5gc-nswo..mnc<chMNC>.mcc<chMCC>.3gppnetwork.org; where 5gc-nswo is a NSWO tag, mnc<chMNC> is configured to indicate the second MNC of the second realm, mcc<chMCC> is configured to indicate the second MCC of the second realm, and 3gppnetwork.org is a domain name.

In conjunction with some embodiments of the first aspect, in some embodiments, the second realm may be a PLMN. The first NAI may satisfy the following format: 5gc-nswo.mnc<chMNC>.mcc<chMCC>.3gppnetwork.org!<usemame of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in a SUCI, mnc<chMNC> is configured to indicate the second MNC of the second realm, mcc<chMCC> is configured to indicate the second MCC of the second realm, nid<NID> is configured to indicate the first NID of the first realm, mnc<servingMNC> is configured to indicate the first MNC of the first realm, and mcc<servingMCC> is configured to indicate the first MCC of the first realm.

According to embodiments of the present disclosure, the NAI includes information about the PLMN where the credential holder is deployed, i.e., the MNC and the MCC, thereby identifying the second realm where the credential holder is located, i.e., the PLMN.

In conjunction with some embodiments of the first aspect, in some embodiments, the second realm may be an NPN. The second information may include a second NID, a second MNC and a second MCC of the second realm.

In conjunction with some embodiments of the first aspect, in some embodiments, the second realm may be an NPN. The second information may satisfy the following format: 5gc-nswo.nid<chNID>.mnc<chMNC>.mcc<chMCC>.3gppnetwork.org; where 5gc-nswo is a NSWO tag, nid<chNID> is configured to indicate the second NID of the second realm, mnc<chMNC> is configured to indicate the second MNC of the second realm, mcc<chMCC> is configured to indicate the second MCC of the second realm, and 3gppnetwork.org is a domain name.

In conjunction with some embodiments of the first aspect, in some embodiments, the second realm may be an NPN. The first NAI may satisfy the following format: 5gc-nswo.nid<chNID>.mnc<chMNC>.mcc<chMCC>.3gppnetwork.org!<username of SUCI in NAI format>@5gc-nswo.nid<servingNID>.mnc<servingMNC>.mcc<servingMCC>.3gppnetwork.org; where 5gc-nswo is a NSWO tag, 3gppnetwork.org is a domain name, username is configured to indicate a username in the SUCI, nid<chNID> is configured to indicate the second NID of the second realm, mnc<chMNC> is configured to indicate the second MNC of the second realm, mcc<chMCC> is configured to indicate the second MCC of the second realm, the second nid<servingNID> is configured to indicate the first NID of the first realm, mnc<servingMNC> is configured to indicate the first MNC of the first realm, and mcc<servingMCC> is configured to indicate the first MCC of the first realm.

According to embodiments of the present disclosure, the NAI includes information about the NPN where the credential holder is deployed, i.e., NID, MNC and MCC, thereby identifying the second realm where the credential holder is located, i.e., the NPN.

In conjunction with some embodiments of the first aspect, in some embodiments, the second realm may be a realm to which an AAA server belongs. The second information may include indication information of the realm to which the AAA server belongs.

In conjunction with some embodiments of the first aspect, in some embodiments, the second realm may be an AAA server. The second information may satisfy the following format: 5gc-nswo.AAArealm; where 5gc-nswo is a NSWO tag, and AAArealm is indication information of the realm to which the AAA server belongs.

In conjunction with some embodiments of the first aspect, in some embodiments, the second realm may be an AAA server. The first NAI may satisfy the following format: 5gc-nswo.AAArealm!<username of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in the SUCI, AAArealm is indication information of the realm to which the AAA server belongs, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the first aspect, in some embodiments, the indication information of the realm to which the AAA server belongs may include a FQDN of the AAA server.

According to embodiments of the present disclosure, the NAI includes information about the AAA server where the credential holder is deployed, i.e., the indication information of the realm to which the AAA server belongs, thereby identifying the second realm where the credential holder is located.

In conjunction with some embodiments of the first aspect, in some embodiments, the first NAI may be carried in an EAP response/identity message.

According to embodiments of the present disclosure, the first NAI can be sent to the network device in the EAP response/identity message during the EAP authentication procedure. In this way, the network device can obtain the first NAI in a timely manner during the EAP authentication procedure, thereby completing the authentication.

In conjunction with some embodiments of the first aspect, in some embodiments, before sending the first NAI to the network device, the method may further include: receiving third information from the network device. The third information is used by the terminal to determine an NAI format of the first NAI.

In conjunction with some embodiments of the first aspect, in some embodiments, the third information may be carried in an EAP identity/request message.

According to embodiments of the present disclosure, the third information can be sent to the terminal in the EAP identity/request message during the EAP authentication procedure. Based on the third information, the terminal can determine the NAI format of the first NAI. In this way, when the EAP response/identity message is sent, the terminal can determine the NAI format of the first NAI according to the specific circumstances.

In conjunction with some embodiments of the first aspect, in some embodiments, the network device may be located in a WLAN-AN.

In a second aspect, embodiments of the present disclosure provide a communication method, which is performed by a network device and includes: receiving a first NAI from a terminal. The first NAI includes first information and second information, the first information is configured to indicate a first realm corresponding to the network device, and the second information is configured to indicate a second realm corresponding to a credential holder of the terminal. The first realm is an NPN.

In conjunction with some embodiments of the second aspect, in some embodiments, the second realm may be one of the following types: a PLMN, an NPN, or a realm to which an AAA server belongs.

In conjunction with some embodiments of the second aspect, in some embodiments, the first NAI may satisfy the following format: CHrealm!username@NPNrealm; where CHrealm represents the second information, username represents a username, NPNrealm represents the first information, and CHrealm, username and NPNrealm are separated by ! and @.

In conjunction with some embodiments of the second aspect, in some embodiments, the first information may include a first NID, a first MNC and a first MCC of the first realm.

In conjunction with some embodiments of the second aspect, in some embodiments, the second realm may be a PLMN. The second information may include a second MNC and a second MCC of the second realm.

In conjunction with some embodiments of the second aspect, in some embodiments, the second realm may be a PLMN. The second information may satisfy the following format: 5gc-nswo..mnc<chMNC>.mcc<chMCC>.3gppnetwork.org; where 5gc-nswo is a NSWO tag, mnc<chMNC> is configured to indicate the second MNC of the second realm, mcc<chMCC> is configured to indicate the second MCC of the second realm, and 3gppnetwork.org is a domain name.

In conjunction with some embodiments of the second aspect, in some embodiments, the second realm may be a PLMN. The first NAI may satisfy the following format: 5gc-nswo.mnc<chMNC>.mcc<chMCC>.3gppnetwork.org!<usemame of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in a SUCI, mnc<chMNC> is configured to indicate the second MNC of the second realm, mcc<chMCC> is configured to indicate the second MCC of the second realm, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the second aspect, in some embodiments, the second realm may be an NPN. The second information may include a second NID, a second MNC and a second MCC of the second realm.

In conjunction with some embodiments of the second aspect, in some embodiments, the second realm may be an NPN. The second information may satisfy the following format: 5gc-nswo.nid<chNID>.mnc<chMNC>.mcc<chMCC>.3gppnetwork.org; where 5gc-nswo is a NSWO tag, nid<chNID> is configured to indicate the second NID of the second realm, mnc<chMNC> is configured to indicate the second MNC of the second realm, mcc<chMCC> is configured to indicate the second MCC of the second realm, and 3gppnetwork.org is a domain name.

In conjunction with some embodiments of the second aspect, in some embodiments, the second realm may be an NPN. The first NAI may satisfy the following format: 5gc-nswo.nid<chNID>.mnc<chMNC>.mcc<chMCC>.3gppnetwork.org!<username of SUCI in NAI format>@5gc-nswo.nid<servingNID>.mnc<servingMNC>.mcc<servingMCC>.3gppnetwork.org; where 5gc-nswo is a NSWO tag, 3gppnetwork.org is a domain name, username is configured to indicate a username in the SUCI, nid<chNID> is configured to indicate the second NID of the second realm, mnc<chMNC> is configured to indicate the second MNC of the second realm, mcc<chMCC> is configured to indicate the second MCC of the second realm, nid<servingNID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the second aspect, in some embodiments, the second realm may be a realm to which an AAA server belongs. The second information may include indication information of the realm to which the AAA server belongs.

In conjunction with some embodiments of the second aspect, in some embodiments, the second realm may be an AAA server. The second information may satisfy the following format: 5gc-nswo.AAArealm; where 5gc-nswo is a NSWO tag, and AAArealm is indication information of the realm to which the AAA server belongs.

In conjunction with some embodiments of the second aspect, in some embodiments, the second realm may be an AAA server. The first NAI may satisfy the following format: 5gc-nswo.AAArealm!<username of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in the SUCI, AAArealm is indication information of the realm to which the AAA server belongs, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the second aspect, in some embodiments, the indication information of the realm to which the AAA server belongs may include a FQDN of the AAA server.

In conjunction with some embodiments of the second aspect, in some embodiments, the first NAI may be carried in an EAP response/identity message.

In conjunction with some embodiments of the second aspect, in some embodiments, before receiving the first NAI from the terminal, the method may further include: sending third information to the terminal. The third information is used by the terminal to determine an NAI format of the first NAI.

In conjunction with some embodiments of the second aspect, in some embodiments, the third information may be carried in an EAP identity/request message.

In conjunction with some embodiments of the second aspect, in some embodiments, after receiving the first NAI from the terminal, the method may further include: generating a second NAI based on the first NAI. The second NAI is generated by removing the first information from the first NAI.

In conjunction with some embodiments of the second aspect, in some embodiments, the network device may be located in a WLAN-AN.

In conjunction with some embodiments of the second aspect, in some embodiments, after generating the second NAI based on the first NAI, the method may further include:
sending the second NAI to a NSWOF or an AAA server corresponding to the credential holder.

In a third aspect, embodiments of the present disclosure provide a communication apparatus, which is provided in a terminal and includes: a sending module, configured to send a first NAI to a network device. The first NAI includes first information and second information, the first information is configured to indicate a first realm corresponding to the network device, and the second information is configured to indicate a second realm corresponding to a credential holder of the terminal. The first realm is an NPN.

In conjunction with some embodiments of the third aspect, in some embodiments, the second realm may be one of the following types: a PLMN, an NPN, or a realm to which an AAA server belongs.

In conjunction with some embodiments of the third aspect, in some embodiments, the first NAI may satisfy the following format: CHrealm!username@NPNrealm; where CHrealm represents the second information, username represents a username, NPNrealm represents the first information, and CHrealm, username and NPNrealm are separated by ! and @.

In conjunction with some embodiments of the third aspect, in some embodiments, the first information may include a first NID, a first MNC and a first MCC of the first realm.

In conjunction with some embodiments of the third aspect, in some embodiments, the second realm may be a PLMN. The second information may include a second MNC and a second MCC of the second realm.

In conjunction with some embodiments of the third aspect, in some embodiments, the second realm may be a PLMN. The second information may satisfy the following format: 5gc-nswo..mnc<chMNC>.mcc<chMCC>.3gppnetwork.org; where 5gc-nswo is a NSWO tag, mnc<chMNC> is configured to indicate the second MNC of the second realm, mcc<chMCC> is configured to indicate the second MCC of the second realm, and 3gppnetwork.org is a domain name.

In conjunction with some embodiments of the third aspect, in some embodiments, the second realm may be a PLMN. The first NAI may satisfy the following format: Sgc-nswo.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in a SUCI, mnc<chMNC> is configured to indicate the second MNC of the second realm, mcc<chMCC> is configured to indicate the second MCC of the second realm, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the third aspect, in some embodiments, the second realm may be an NPN. The second information may include a second NID, a second MNC and a second MCC of the second realm.

In conjunction with some embodiments of the third aspect, in some embodiments, the second realm may be an NPN. The second information may satisfy the following format: 5gc-nswo.nid<chNID>.mnc<chMNC>.mcc<chMCC>.3gppnetwork.org; where 5gc-nswo is a NSWO tag, nid<chNID> is configured to indicate the second NID of the second realm, mnc<chMNC> is configured to indicate the second MNC of the second realm, mcc<chMCC> is configured to indicate the second MCC of the second realm, and 3gppnetwork.org is a domain name.

In conjunction with some embodiments of the third aspect, in some embodiments, the second realm may be an NPN. The first NAI may satisfy the following format: 5gc-nswo.nid<chNID>.mnc<chMNC>.mcc<chMCC>.3gppnetwork.org!<usename of SUCI in NAI format>@5gc-nswo.nid<servingNID>.mnc<servingMNC>.mcc<servingMCC>.3gppnetwork.org; where 5gc-nswo is a NSWO tag, 3gppnetwork.org is a domain name, username is configured to indicate a username in the SUCI, nid<chNID> is configured to indicate the second NID of the second realm, mnc<chMNC> is configured to indicate the second MNC of the second realm, mcc<chMCC> is configured to indicate the second MCC of the second realm, nid<servingNID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the third aspect, in some embodiments, the second realm may be a realm to which an AAA server belongs. The second information may include indication information of the realm to which the AAA server belongs.

In conjunction with some embodiments of the third aspect, in some embodiments, the second realm may be an AAA server. The second information may satisfy the following format: 5gc-nswo.AAArealm; where 5gc-nswo is a NSWO tag, and AAArealm is indication information of the realm to which the AAA server belongs.

In conjunction with some embodiments of the third aspect, in some embodiments, the second realm may be an AAA server. The first NAI may satisfy the following format: 5gc-nswo.AAArealm!<usemame of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in the SUCI, AAArealm is indication information of the realm to which the AAA server belongs, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the third aspect, in some embodiments, the indication information of the realm to which the AAA server belongs may include a FQDN of the AAA server.

In conjunction with some embodiments of the third aspect, in some embodiments, the first NAI may be carried in an EAP response/identity message.

In conjunction with some embodiments of the third aspect, in some embodiments, the apparatus may further include a receiving module. The receiving module is configured to receive third information from the network device. The third information is used by the terminal to determine an NAI format of the first NAI.

In conjunction with some embodiments of the third aspect, in some embodiments, the third information may be carried in an EAP identity/request message.

In conjunction with some embodiments of the third aspect, in some embodiments, the network device may be located in a WLAN-AN.

In a fourth aspect, embodiments of the present disclosure provide a communication apparatus, which is provided in a network device and includes: a receiving module, configured to receive a first NAI from a terminal. The first NAI includes first information and second information, the first information is configured to indicate a first realm corresponding to the network device, and the second information is configured to indicate a second realm corresponding to a credential holder of the terminal. The first realm is an NPN.

In conjunction with some embodiments of the fourth aspect, in some embodiments, the second realm may be one of the following types: a PLMN, an NPN, or a realm to which an AAA server belongs.

In conjunction with some embodiments of the fourth aspect, in some embodiments, the first NAI may satisfy the following format: CHrealm!username@NPNrealm; where CHrealm represents the second information, username represents a username, NPNrealm represents the first information, and CHrealm, username and NPNrealm are separated by ! and @.

In conjunction with some embodiments of the fourth aspect, in some embodiments, the first information may include a first NID, a first MNC and a first MCC of the first realm.

In conjunction with some embodiments of the fourth aspect, in some embodiments, the second realm may be a PLMN. The second information may include a second MNC and a second MCC of the second realm.

In conjunction with some embodiments of the fourth aspect, in some embodiments, the second realm may be a PLMN. The second information may satisfy the following format: 5gc-nswo..mnc<chMNC>.mcc<chMCC>.3gppnetwork.org; where 5gc-nswo is a NSWO tag, mnc<chMNC> is configured to indicate the second MNC of the second realm, mcc<chMCC> is configured to indicate the second MCC of the second realm, and 3gppnetwork.org is a domain name.

In conjunction with some embodiments of the fourth aspect, in some embodiments, the second realm may be a PLMN. The first NAI may satisfy the following format: Sgc-nswo.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in a SUCI, mnc<chMNC> is configured to indicate the second MNC of the second realm, mcc<chMCC> is configured to indicate the second MCC of the second realm, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the fourth aspect, in some embodiments, the second realm may be an NPN. The second information may include a second NID, a second MNC and a second MCC of the second realm.

In conjunction with some embodiments of the fourth aspect, in some embodiments, the second realm may be an NPN. The second information may satisfy the following format: 5gc-nswo.nid<chNID>.mnc<chMNC>.mcc<chMCC>.3gppnetwork.org; where 5gc-nswo is a NSWO tag, nid<chNID> is configured to indicate the second NID of the second realm, mnc<chMNC> is configured to indicate the second MNC of the second realm, mcc<chMCC> is configured to indicate the second MCC of the second realm, and 3gppnetwork.org is a domain name.

In conjunction with some embodiments of the fourth aspect, in some embodiments, the second realm may be an NPN. The first NAI may satisfy the following format: 5gc-nswo.nid<chNID>.mnc<chMNC>.mcc<chMCC>.3gppnetwork.org!<usename of SUCI in NAI format>@5gc-nswo.nid<servingNID>.mnc<servingMNC>.mcc<servingMCC>.3gppnetwork.org; where 5gc-nswo is a NSWO tag, 3gppnetwork.org is a domain name, username is configured to indicate a username in the SUCI, nid<chNID> is configured to indicate the second NID of the second realm, mnc<chMNC> is configured to indicate the second MNC of the second realm, mcc<chMCC> is configured to indicate the second MCC of the second realm, nid<servingNID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the fourth aspect, in some embodiments, the second realm may be a realm to which an AAA server belongs. The second information may include indication information of the realm to which the AAA server belongs.

In conjunction with some embodiments of the fourth aspect, in some embodiments, the second realm may be an AAA server. The second information may satisfy the following format: 5gc-nswo.AAArealm; where 5gc-nswo is a NSWO tag, and AAArealm is indication information of the realm to which the AAA server belongs.

In conjunction with some embodiments of the fourth aspect, in some embodiments, the second realm may be an AAA server. The first NAI may satisfy the following format: 5gc-nswo.AAArealm!<username of SUCI in NAI format>@5gc-nswo.nid<NID>.mnc<servingMNC>.mcc<servingMCC>.3gppnetwork.org; where 5gc-nswo is a NSWO tag, 3gppnetwork.org is a domain name, username is configured to indicate a username in the SUCI, AAArealm is indication information of the realm to which the AAA server belongs, nid<NID> is configured to indicate the first NID of the first realm, mnc<servingMNC> is configured to indicate the first MNC of the first realm, and mcc<servingMCC> is configured to indicate the first MCC of the first realm.

In conjunction with some embodiments of the fourth aspect, in some embodiments, the indication information of the realm to which the AAA server belongs may include a FQDN of the AAA server.

In conjunction with some embodiments of the fourth aspect, in some embodiments, the first NAI may be carried in an EAP response/identity message.

In conjunction with some embodiments of the fourth aspect, in some embodiments, the apparatus may further include a sending module. The sending module is configured to send third information to the terminal. The third information is used by the terminal to determine an NAI format of the first NAI.

In conjunction with some embodiments of the fourth aspect, in some embodiments, the third information may be carried in an EAP identity/request message.

In conjunction with some embodiments of the fourth aspect, in some embodiments, the apparatus may further include a processing module. The processing module is configured to generate a second NAI based on the first NAI. The second NAI is generated by removing the first information from the first NAI.

In conjunction with some embodiments of the fourth aspect, in some embodiments, the network device may be located in a WLAN-AN.

In conjunction with some embodiments of the fourth aspect, in some embodiments, the sending module may be further configured to send the second NAI to a NSWOF or an AAA server corresponding to the credential holder.

In a fifth aspect, embodiments of the present disclosure provide a communication device, which includes at least one processor. The processor is configured to invoke instructions to execute the communication method as described in the first and second aspects and embodiments thereof.

In a sixth aspect, embodiments of the present disclosure provide a communication system, which includes a terminal and a network device. The terminal is configured to implement the communication method as described in the first aspect and embodiments thereof. The network device is configured to implement the communication method as described in the second aspect and embodiments thereof.

In a seventh aspect, embodiments of the present disclosure provide a storage medium having instructions stored. The instructions, when executed by a processor, perform the communication method as described in the first and second aspects and embodiments thereof.

In an eighth aspect, there is provided a computer program or computer program product. The computer program or computer program product includes codes. Instructions, when executed by a processor, perform the communication method as described in the first and second aspects and embodiments thereof.

It is understood that the aforementioned communication apparatus, communication device, communication system, storage medium, computer program, and computer program product are all used to perform the methods provided by the embodiments of the present disclosure. Therefore, the beneficial effects that can be achieved can refer to the beneficial effects in the corresponding methods, which will not be repeated here.

Embodiments of the present disclosure provide a communication method and apparatus, a communication device, a communication system, and a storage medium. In some embodiments, the terms, such as communication method, information processing method, information transmission method, can be replaced with each other, the terms, such as communication apparatus, information processing apparatus, information transmission apparatus, can be replaced with each other, and the terms, such as communication system, information processing system, can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", "one or more", or "at least one", etc. For example, when using articles such as "a", "an", "the" in English in translation, the noun after the article may be understood as a singular expression or a plural expression.

In the embodiments of the present disclosure, "plurality/multiple" refers to two or more.

In some embodiments, terms such as "at least one of", "one or more", "a plurality of', "multiple" and the like can be used interchangeably.

In some embodiments, the recording manners, such as "at least one of A and B", "A and/or B", "A in one case, B in another case", "one case A, another case B", may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner, such as "A or B", may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, if the description object is a "field", the ordinal number before the "field" in the "first realm" and the "second realm" does not limit the position or order between the "fields", and the "first" and "second" do not limit whether the "fields" they modify are in the same message, nor do they limit the order of the "first realm" and the "second realm". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatus" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "...", "determine...", "in the case of...", "at the time of...", "when...", "if...", "in case...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses and the like may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as apparatuses included in the network (e.g., an access network device, a core network device, etc.).

In some embodiments, the terms "access network device (AN device), "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and so on can be used interchangeably.

In some embodiments, the terms "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), etc.). In this case, it can also be set as a structure in which the terminal has all or part of the functions of the access network device. In addition, terms such as "uplink" and "downlink" can also be replaced by terms corresponding to the communication between terminals (for example, "side"). For example, uplink channels, downlink channels, etc. can be replaced by side channels, and uplinks, downlinks, etc. can be replaced by side links.

In some embodiments, the terminal may be replaced by an access network device, a core network device, or a network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

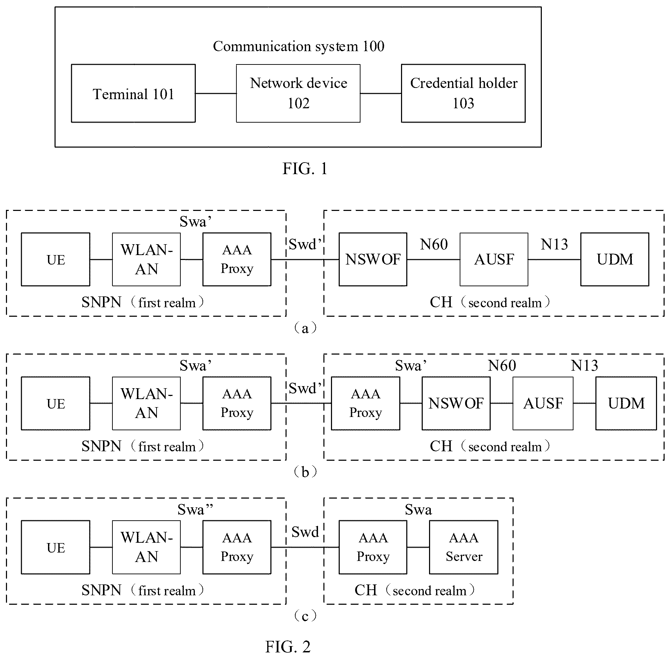

FIG. 1 is a schematic diagram showing the architecture of a communication system according to an embodiment of the present disclosure. As shown in FIG. 1, a communication system 100 includes a terminal 101, a network device 102 and a credential holder 103.

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include an access network device and/or a core network device. In some embodiments, the network device 102 may be, for example, a node or device that accesses a terminal to a wireless network. The access network device may include at least one of an evolved Node B (eNB), a next generation evolved Node B (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the credential holder 103 may be related to a Public Land Mobile Network (PLMN), an NPN, or an Authentication, Authorization and Accounting (AAA) server.

In some embodiments, the network device 102 and the credential holder 103 may belong to different realms. For example, the network device 102 may belong to a first realm, and the credential holder may belong to a second realm.

In an example, the network device 102 may be located in a WLAN access network (WLAN-AN). In an example, the network device 102 may be a WLAN-AN (or referred to as a WLAN-AN device).

FIG. 2 is a schematic diagram of a specific NSWO architecture of a communication system provided according to an embodiment of the present disclosure.

As shown in (a) in FIG. 2, the network device 102 can be the WLAN-AN and is located in a standalone NPN (SNPN). The credential holder 103 can be related to the PLMN (e.g., the credential holder 103 is implemented using the PLMN). The PLMN includes a NSWO function (NSWOF), an authentication server function (AUSF), and a user data management (UDM) function. The SNPN corresponds to the first realm, and the PLMN corresponds to the second realm.

As shown in (b) in FIG. 2, the network device 102 can be the WLAN-AN and is located in the SNPN. The credential holder 103 can be related to the NPN (e.g., the credential holder 103 is implemented using the NPN). The NPN includes the NSWOF, the AUSF, and the UDM. The SNPN corresponds to the first realm, and the NPN corresponds to the second realm. It can be understood that the SNPN corresponding to the first realm is different from the NPN corresponding to the second realm.

As shown in (c) in FIG. 2, the network device 102 can be the WLAN-AN and is located in the SNPN. The credential holder 103 can be related to the AAA server (e.g., the credential holder 103 is implemented using the AAA server). The SNPN corresponds to the first realm, and the realm to which the AAA server of the credential holder of the terminal belongs is the second realm.

In some embodiments, the technical solutions of the present disclosure may be applicable to the Open RAN architecture. In this case, the interfaces between or within the network devices involved in the embodiments of the present disclosure may become internal interfaces of the Open RAN, and the processes and information interactions between these internal interfaces may be implemented through software or programs.

In some embodiments, the network device may be composed of a central unit (CU) and a distributed unit (DU), where the CU may also be called a control unit. The CU-DU structure may be used to split the protocol layer of the network device, with some functions of the protocol layer being centrally controlled by the CU, and the remaining part or all of the functions of the protocol layer being distributed in the DU, and the DU being centrally controlled by the CU, but not limited thereto.

It can be understood that the communication system described in the embodiments of the present disclosure is for the purpose of more clearly illustrating the technical solutions of the embodiments of the present disclosure, and does not constitute a limitation on the technical solutions provided by the embodiments of the present disclosure. A person skilled in the art can know that with the evolution of the system architecture and the emergence of new service scenarios, the technical solutions provided by the embodiments of the present disclosure are also applicable to similar technical problems.

The following embodiments of the present disclosure may be applied to the communication system 100 shown in FIG. 1, or part of the subjects, but are not limited thereto. The subjects shown in FIG. 1 are examples, and the communication system 100 may include all or part of the subjects in FIG. 1, or may include other subjects other than FIG. 1, and the number and form of the subjects are arbitrary, and the connection relationship between the subjects is an example, and the subjects may be connected or disconnected, and the connection may be in any manner, which may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle to Everything (V2X), systems using other communication methods, and next-generation systems expanded based on them. In addition, a combination of multiple systems (for example, a combination of LTE or LTE-A with 5G, etc.) may also be applied.

In some embodiments, NSWO is the capability provided by the 5GS and by the terminal to enable the connection to a WLAN-AN without registration to 5GS. In specific, after the mutual authentication between the terminal and the 5G core network, the 5G core network will send a key, which is shared between the UE and the 5G core network, to the WLAN-AN. In this way, the UE and the WLAN-AN can realize mutual authentication based on the shared key. To obtain the shared key from the credential holder, the WLAN-AN should enable the mutual authentication between the UE and the credential holder. Thus, the WLAN-AN has to route the authentication-related message to the credential holder.

In some embodiments, in the NPN scenario, the NAI sent by the UE to the WLAN-AN contains only the realm information of the NPN

In some embodiments, the terminal is in a roaming state. In this case, the NPN and the credential holder may be deployed in different realms. Based on the NAI, which only contains the realm information of the NPN, it is difficult for the WLAN-AN to route the authentication-related message to the credential holder.

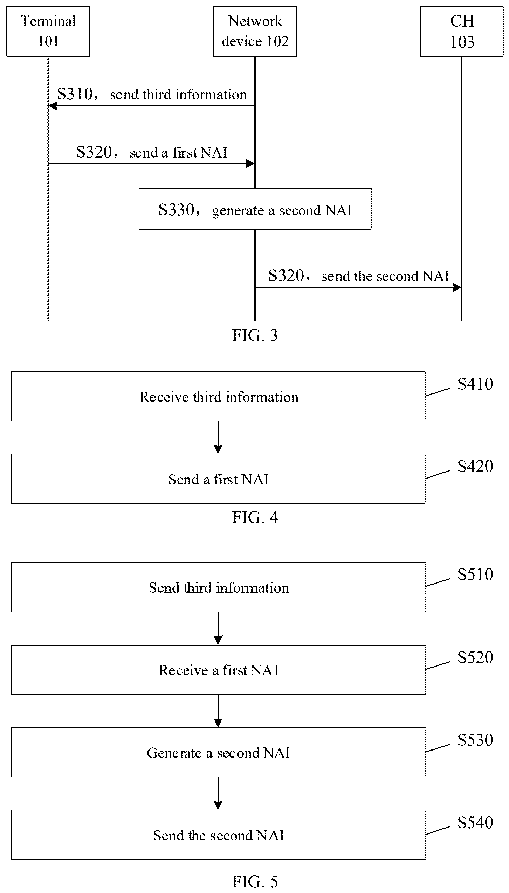

FIG. 3 is a schematic interactive diagram of a communication method provided according to an embodiment of the present disclosure. The embodiment of the present disclosure relates to a communication method, which is applied to the communication system 100. In the communication system 100, the network device 102 is associated with the first realm, and the credential holder 103 is associated with the second realm. As shown in FIG. 3, the method includes steps S310 to S340.

In the step S310, the network device 102 sends third information to the terminal 101.

In some embodiments, the terminal 101 may receive the third information from the network device 102.

In some embodiments, the third information may be used by the terminal 101 to determine an NAI format of a first NAI sent to the network device 102.

In some embodiments, the third information may be used to indicate the NAI format of the first NAI sent by the terminal 101 to the network device 102.

In some embodiments, the third information may include a type of the second realm where the credential holder 103 is located, i.e., a PLMN, an NPN, or an AAA server.

In some embodiments, the name of the third information is not limited. For example, the third information may be indication information, etc.

In some embodiments, after receiving the third information, the terminal 101 can determine the NAI format of the first NAI based on the third information.

In some embodiments, the network device 102 may send a broadcast message to the terminal 101. The broadcast message may carry the third information. In other words, the third information may be carried in the broadcast message.

In some embodiments, the network device 102 may send an Extended Authentication Protocol (EAP) identity/request message to the terminal 101. The EAP identity/request message may carry the third information. In other words, the third information may be carried in the EAP identity/request message.

In the step S320, the terminal 101 sends a first NAI to the network device 102.

In some embodiments, the network device 102 may receive the first NAI.

In some embodiments, the first NAI may be an identity of the NAI format used by the terminal 101.

In some embodiments, the first NAI may include first information and second information. The first information is used to indicate the first realm corresponding to the network device 102. The second information is used to indicate the second realm corresponding to the credential holder 103 of the terminal 101.

In some embodiments, the first information may be included in a first realm part of the first NAI.

In some embodiments, the second information may be included in a second realm part of the first NAI.

In some embodiments, the first realm may be the NPN.

In some embodiments, the first NAI may include a username.

In some embodiments, the first NAI may take the following NAI format: second information!username@first information. Here, the symbol "!" is used to separate the second information and the username. The symbol "@" is used to separate the username and the first information. It can be understood that the order of the first information, the second information, and the username can be adjusted, and other separation methods can be used, which are not specifically limited by embodiments of the present disclosure.

In some embodiments, the first NAI can take the following NAI format: CHrealm!username@NPNrealm. Here, CHrealm represents the second information, i.e., it is used to indicate the second realm. In other words, CHrealm is the second realm part. NPNrealm represents the first information, i.e., it is used to indicate the first realm. In other words, NPNrealm is the first realm part. username represents the username. The symbol "!" is used to separate CHrealm and username. The symbol "@" is used to separate username and NPNrealm.

In some embodiments, the first NAI may take the following NAI format: username@NPNrealm!CHrealm. Here, CHrealm represents the second information, i.e., it is used to indicate the second realm. NPNrealm represents the first information, i.e., it is used to indicate the first realm. username represents the username. The symbol "@" is used to separate username and NPNrealm. The symbol "!" is used to separate PNPrealm and CHrealm.

In some embodiments, the first information includes a first Network Identifier (NID), a first Mobile Network Code (MNC) and a first Mobile Country Code (MCC) of the first realm. The combination of the first NID, the first MNC and the first MCC can be used to identify the NPN of the first realm.

In some embodiments, the second realm may be one of the following: a PLMN, an NPN, or a realm to which an AAA server belongs.

In some embodiments, the second realm may be the PLMN.

In some embodiments, the second information may include a second MNC and a second MCC of the second realm. The combination of the second MNC and the second MCC can be used to identify the PLMN of the second realm. It can be understood that the combination of the second MNC and the second MCC can constitute an identifier of the PLMN, i.e., a PLMN ID.

In some embodiments, the second information may be in the following format: a NSWO tag, the second MNC, the second MCC and a domain name.

In some embodiments, the second information may be in the following format: 5gc-nswo.nid<NID>.mnc<chMNC>.mcc<chMCC>.3gppnetwork.org. 5gc-nswo is the NSWO tag, which is used to indicate the use of a NSWO service. mnc<chMNC> is used to indicate the second MNC, and chMNC is a value of the second MNC. mcc<chMCC> is used to indicate the second MCC, and chMCC is a value of the second MCC. 3gppnetwork.org is the domain name.

In some embodiments, the second realm may be the NPN.

In some embodiments, the second information may include a second NID, a second MNC and a second MCC of the second realm. It can be understood that the combination of the second NID, the second MNC and the second MCC can be used to identify the NPN of the second realm.

In some embodiments, the second information may be in the following format: the NSWO tag, the second NID, the second MNC, the second MCC and the domain name.

In some embodiments, the second information may be in the following format: 5gc-nswo.nid<NID>.mnc<chMNC>.mcc<chMCC>.3gppnetwork.org. 5gc-nswo is the NSWO tag, which is used to indicate the use of the NSWO service. nid<NID> is used to indicate the second NID, and NID is a value of the second NID. mnc<chMNC> is used to indicate the second MNC, and chMNC is a value of the second MNC. mcc<chMCC> is used to indicate the second MCC, and chMCC is a value of the second MCC. 3gppnetwork.org is the domain name.

In some embodiments, the second realm may be the realm to which the AAA server belongs.

In some embodiments, the second information may include indication information of the realm to which the AAA server belongs.

In some embodiments, the second information may include a Fully Qualified Domain Name (FQDN) of the AAA server.

In some embodiments, the second information may be in the following format: the NSWO tag, and the indication information of the realm to which the AAA server belongs.

In some embodiments, the second information may be in the following format: 5gc-nswo.AAArealm. 5gc-nswo is the NSWO tag. AAArealm is the indication information of the realm to which the AAA server belongs.

In some embodiments, when the terminal 101 determines to use the NSWO service, the terminal 101 may use a Subscription Concealed Identifier (SUCI) or an anonymous SUCI in the NAI forma to construct its own identity.

In some embodiments, the second realm may be the PLMN, and the first NAI may include at least one of the following: the NSWO tag, the second MNC, the second MCC, the domain name, the username, the first NID, the first MNC, or the first MCC.

In some embodiments, the second realm may be the PLMN, and the first NAI may be in the following format: 5gc-nswo.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org. 5gc-nswo is the NSWO tag. 3gppnetwork.org is the domain name. username is used to indicate the username in the SUCI. mnc<chMNC> is used to indicate the second MNC. mcc<chMCC> is used to indicate the second MCC. nid<NID> is used to indicate the first NID, and NID is a value of the first NID. mnc<servingMNC> is used to indicate the first MNC, and servingMNC is a value of the first MNC. mcc<servingMCC> is used to indicate the first MCC, and servingMCC is a value of the first MCC.

In some embodiments, the second realm may be the NPN, and the first NAI may contain at least one of the following: the NSWO tag, the second NID, the second MNC, the second MCC, the domain name, the username, the first NID, the first MNC, or the first MCC.

In some embodiments, the second realm may be the NPN, and the first NAI may be in the following format: 5gc-nswo.nid<NID>.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org. 5gc-nswo is the NSWO tag. 3gppnetwork.org is the domain name. username is used to indicate the username in the SUCI. The first nid<NID> is used to indicate the second NID. mnc<chMNC> is used to indicate the second MNC. mcc<chMCC> is used to indicate the second MCC. The second nid<NID> is used to indicate the first NID, and NID is a value of the first NID. mnc<servingMNC> is used to indicate the first MNC, and servingMNC is a value of the first MNC. mcc<servingMCC> is configured to indicate the first MCC, and servingMCC is a value of the first MCC.

In some embodiments, the second realm may be the AAA server, and the first NAI may include at least one of the following: the NSWO tag, the indication information of the realm to which the AAA server belongs, the username, the first NID, the first MNC, or the first MCC.

In some embodiments, the second realm may be the realm to which the AAA server belongs, and the first NAI may be in the following format: 5gc-nswo.AAArealm!<username of SUCI in NAI format>@5gc-nswo.nid<NID>.mnc<servingMNC>.mcc<servingMCC>.3gppnetwork.org. 5gc-nswo is the NSWO tag. 3gppnetwork.org is the domain name. username is used to indicate the username in the SUCI. AAArealm is used to indicate the realm to which the AAA server belongs. nid<NID> is used to indicate the first NID, and NID is a value of the first NID. mnc<servingMNC> is used to indicate the first MNC, and servingMNC is a value of the first MNC. mcc<servingMCC> is used to indicate the first MCC, and servingMCC is a value of the first MCC.

In some embodiments, the first NID can also be represented as nid<CredentialsHolderNID>, the first MNC can also be represented as mnc<CredentialsHolderMNC>, and the first MCC can also be represented as mcc<CredentialsHolderMCC>. Alternatively, it can be understood that the first NID, the first MNC, and the first MCC can also be represented in other manners and formats, which are not limited by embodiments of the present disclosure.

In some embodiments, the first NAI in embodiments of the present disclosure may also be referred to as an extended NAI.

In some embodiments, the terminal 101 may send an EAP response/identity message to the network device 102. The EAP response/identity message carries the first NAI. In other words, the first NAI may be carried in the EAP response/identity message.

In the step S330, the network device 102 generates a second NAI.

In some embodiments, after receiving the first NAI, the network device 102 may generate the second NAI based on the first NAI.

In some embodiments, the network device 102 may obtain the second NAI by removing the first information and retaining the second information based on the first NAI. In other words, the second NAI may include the second realm part in the first NAI but not the first realm part in the first NAI.

In some embodiments, the second NAI may be in the following format: username@second information.

In some embodiments, the second NAI may be in the following format: username@CHrealm.

In some embodiments, the second NAI may be in the following format: second information! username.

In some embodiments, the second NAI may be in the following format: CHrealm! username.

In the step S340, the network device 102 sends the second NAI.

In some embodiments, the network device 102 may send the second NAI to the credential holder 103.

In some embodiments, the credential holder 103 may receive the second NAI from the network device 102.

In some embodiments, when the credential holder 103 is deployed in the PLMN, i.e., the second realm is the PLMN, the network device 102 may send the second NAI to the NSWOWF in the PLMN.

In some embodiments, the network device 102 may send the second NAI to the NSWOF in the PLMN via an AAA proxy.

In some embodiments, when the credential holder 103 is deployed in the NPN, i.e., the second realm is the NPN, the network device 102 may send the second NAI to the NSWOWF in the NPN.

In some embodiments, the network device 102 may send the second NAI to the NSWOF in the NPN via the AAA proxy.

In some embodiments, where the credential holder 103 is deployed through the AAA server, i.e., the second realm is the realm to which the AAA server belongs, the network device 102 may send the second NAI to the AAA server.

In some embodiments, the network device 102 may send the second NAI to the AAA server via the AAA proxy.

In some embodiments, the names of information, etc., are not limited to those described in the embodiments. Terms such as "information", "message", "signal", "signaling", "report", "configuration", "indication", "instruction", "command", "channel", "parameter", "realm", "field", "symbol", "codebook", "codeword", "codepoint", "bit", "data", "program", "chip" and other similar terms may be used interchangeably.

In some embodiments, "obtain", "acquire", "get", "receive", "transmit" "transmit bidirectionally", and "send and/or receive", etc. may be interchangeable, and may be interpreted as various meanings, such as receiving from another subject, obtaining from a protocol, obtaining from an upper layer, obtaining through self-processing, and autonomous implementation, etc.

In some embodiments, terms such as "send", "emit", "report", "issue", "transmit", "transmit bidirectionally", "send and/or receive" may be interchangeable.

In some embodiments, the terms such as "certain", "preset", "pre-set", "set", "indicated", "a", "any" and "first" can be used interchangeably. "Certain A", "preset A", "preset A", "set A", "indicated A", "a A", "any A" and "first A" can be interpreted as the pre-defined A in a protocol or the like, or as A obtained through setting, configuration, or indication, or as certain A, a A, any A, or first A, but are not limited thereto.

The communication method involved in embodiments of the present disclosure may include at least one of the steps S310 to S340. For example, step S320 may be implemented as an independent embodiment. For example, a combination of steps S310 and S320 may be implemented as an independent embodiment. For example, a combination of steps S320 and S330 may be implemented as an independent embodiment. For example, a combination of steps S320, S330, and S340 may be implemented as an independent embodiment. For example, a combination of steps S310, S320, S330, and S340 may be implemented as an independent embodiment. It should be noted that possible independent embodiments consisting of one or more of steps S310 to S340 are not limited thereto.

In some embodiments, steps S330 and S340 are optional, and one or more of these steps may be omitted or substituted in different embodiments.

In some embodiments, step S310 is optional and may be omitted or substituted in different embodiments.

FIG. 4 is a schematic flowchart of a communication method provided according to an embodiment of the present disclosure. The embodiment of the present disclosure relates to a communication method, which is applied to the terminal 101. As shown in FIG. 4, the method includes steps S410 and S420.

In the step S410, third information is received.

The implementation of step S410 may refer to the implementation of step S310 in FIG. 3 and other related parts in the embodiment related to FIG. 3, which will not be repeated here.

In some embodiments, the terminal 101 may receive the third information from the network device 102.

In some embodiments, the network device 102 may send the third information to the terminal 101.

In some embodiments, the third information may be used by the terminal 101 to determine the NAI format of the first NAI sent to the network device 102.

In some embodiments, the terminal 101 may obtain the third information as defined by the protocol.

In some embodiments, the terminal 101 can obtain the third information from a higher layer.

In some embodiments, the terminal 101 may perform processing to obtain the third information.

In the step S420, a first NAI is sent.

The implementation of step S420 may refer to the implementation of step S320 in FIG. 3 and other related parts in the embodiment related to FIG. 3, which will not be repeated here.

In some embodiments, the terminal 101 may send the first NAI to the network device 102.

In some embodiments, the network device 102 may receive the first NAI from the terminal 101.

In some embodiments, the terminal 101 may determine the NAI format of the first NAI based on the third information and send the first NAI.

The communication method involved in embodiments of the present disclosure may include at least one of steps S410 and S420. For example, step S420 may be implemented as an independent embodiment. For example, the combination of steps S410 and S420 may be implemented as an independent embodiment.

In some embodiments, step S410 is optional and may be omitted or substituted in different embodiments.

FIG. 5 is a schematic flowchart of a communication method provided according to an embodiment of the present disclosure. The embodiment of the present disclosure relates to a communication method, which is applied to the network device 102. As shown in FIG. 5, the method includes steps S510 to S540.

In the step S510, a third message is sent.

The implementation of step S510 may refer to the implementation of step S310 in FIG. 3 and other related parts in the embodiment related to FIG. 3, which will not be repeated here.

In some embodiments, the network device 102 may send the third information to the terminal 101.

In some embodiments, the terminal 101 may receive the third information from the network device 102.

In some embodiments, the third information may be used by the terminal 101 to determine the NAI format of the first NAI sent to the network device 102.

In step S520, a first NAI is received.

The implementation of step S520 may refer to the implementation of step S320 in FIG. 3 and other related parts in the embodiment related to FIG. 3, which will not be repeated here.

In some embodiments, the network device 102 may receive the first NAI from the terminal 101.

In some embodiments, the terminal 101 may send the first NAI to the network device 102.

In some embodiments, the first NAI may be sent in a format determined by the terminal 101 based on the third information.

In some embodiments, the network device 102 may obtain the first NAI as defined by a protocol.

In some embodiments, the network device 102 can obtain the first NAI from a higher layer.

In some embodiments, the network device 102 may perform processing to obtain the first NAI.

In the step S530, a second NAI is generated.

The implementation of step S530 may refer to the implementation of step S330 in FIG. 3 and other related parts in the embodiment related to FIG. 3, which will not be repeated here.

In some embodiments, the network device 102 may remove the first information from the first NAI and construct the second NAI based on the first NAI after the first information is removed from it.

In the step S540, the second NAI is sent.

The implementation of step S540 may refer to the implementation of step S340 in FIG. 3 and other related parts in the embodiment related to FIG. 3, which will not be repeated here.

In some embodiments, the network device 102 may send the second NAI to the credential holder 103.

In some embodiments, the credential holder 103 may receive the NAI from the network device 102.

The communication method involved in embodiments of the present disclosure may include at least one of steps S510 to S540. For example, step S520 may be implemented as an independent embodiment. For example, a combination of steps S510 and S520 may be implemented as an independent embodiment. For example, a combination of steps S520, S530, and S540 may be implemented as an independent embodiment. For example, a combination of steps S510 and S520 may be implemented as an independent embodiment. For example, a combination of steps S510, S520, S530, and S540 may be implemented as an independent embodiment. It should be noted that the possible independent embodiments consisting of one or more of steps S510 to S540 are not limited thereto.

In some embodiments, steps S510, S530, and S540 are optional, and one or more of these steps may be omitted or substituted in different embodiments.

In some embodiments, step S 510 is optional and may be omitted or substituted in different embodiments.

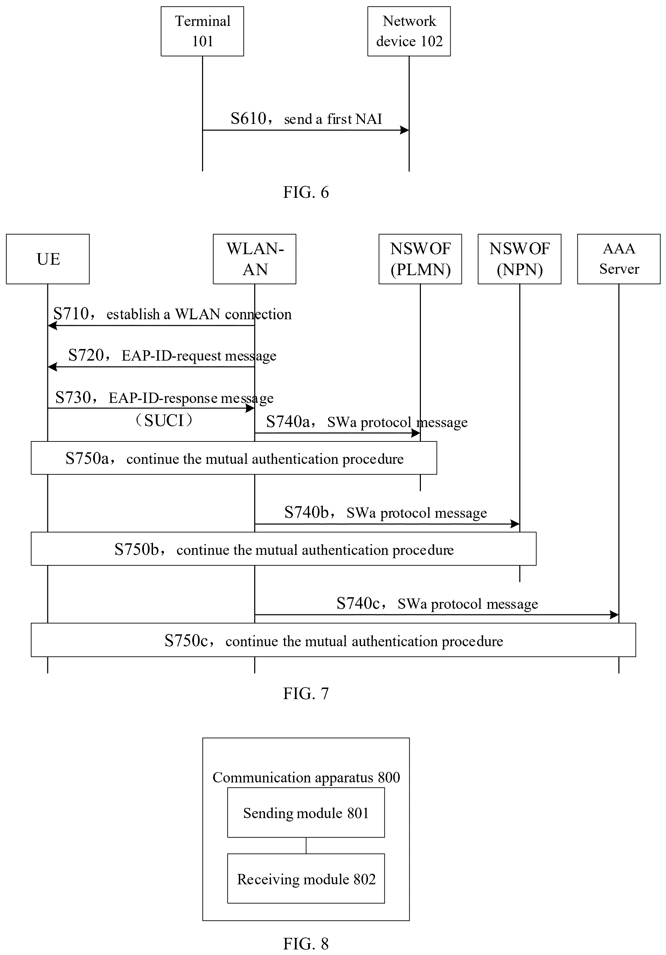

FIG. 6 is a schematic interactive diagram of a communication method provided according to an embodiment of the present disclosure. The embodiment of the present disclosure relates to a communication method, which is applied to the communication system 100. As shown in FIG. 6, the method includes step S610.

In the step S610, the terminal 101 sends a first NAI to the network device 102.

In an embodiment, the network device 102 may receive the first NAI from the terminal 101.

The implementation of step S610 may refer to step S320 in FIG. 3, step S420 in FIG. 4, step S520 in FIG. 5, and other related parts in the embodiment related to FIGS. 3, 4 and 5, which will not be repeated here.

In some embodiments, the above methods may include the methods described in embodiments on the terminal side and the network device side, which will not be repeated here.

FIG. 7 is a schematic interactive diagram of a communication method provided according to an embodiment of the present disclosure. In the embodiment of the present disclosure, the terminal may be a UE, and the network device may be a network device in a WLAN-AN. Furthermore, the credential holder may be implemented based on a PLMN, an NPN, or an AAA server.

As shown in FIG. 7, the method includes steps S710 to S750.

In the step S710, the UE establishes a WLAN connection. The WLAN connection is a connection between the UE and the WLAN-AN. The WLAN-AN is deployed in a serving NPN.

In the step S720, the WLAN-AN sends an EAP identity/request message (i.e., an EAP-ID-request message) to the UE.

In the step S730, the UE sends an EAP response/identity message (i.e., an EAP-ID-response message) to the WLAN-AN.

In some embodiments, if the UE determines to use the NSWO service, the UE shall use the SUCI/anonymous SUCI in the NAI format (i.e., username@realm format as specified in clause 28.7.3 of TS 23.003) to construct the identity irrespective of whether the Subscription Permanent Identifier (SUPI) Type configured on the Universal Subscriber Identity Module (USIM) is International Subscriber Identity (IMSI) or NAI. If the SUPI Type configured on the USIM is IMSI, the UE shall construct the SUCI in the NAI format with username containing the encrypted Mobile Subscriber Identification Number (MSIN) and the realm part containing the MCC/MNC.

In some embodiments, if the WLAN-AN and the credential holder are deployed in different realms, the identity in the EAP Response/Identity message should be an extended NAI. The extended NAI is realized based on the credential holder realm part and the serving NPN realm part. The extended NAI shall have the form CHrealm!username@NPNrealm. NPNrealm is the realm built using the identification of the serving NPN (NID (or servingNID), serving MCC and servingMNC) selected by the UE.

In some embodiments, if the credential holder is realized based on the PLMN, CHrealm can take the form of 5gc-nswo.mnc<chMNC>.mcc<chMCC>.3gppnetwork.org. The extended NAI can take the form of 5gc-nswo.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org.

In some embodiments, if the credential holder deployment is realized based on the NPN, CHrealm can take the form of 5gc-nswo.nid<chNID>.mnc<chMNC>.mcc<chMCC>.3gppnetwork.org. The extended NAI can take the form of 5gc-nswo.nid<NID>.mnc<chMNC>.mcc<chMCC>.3gppnetworkorg!<username of SUCI in NAI format>@5gc-nswo.nid<servingNID>.mnc<servingMNC>.mcc<servingMCC>.3gppnetwork.org.

In some embodiments, if the credential holder is realized based on the AAA server, CHrealm should be the realm of the AAA server. The realm of the AAA server can be set as the domain of the AAA server. The extended NAI takes the following form: 5gc-nswo.AAArealm!<username of SUCI in NAI format>@5gc-nswo.nid<NID>.mnc<servingMNC>.mcc<servingMCC>.3gppnetwork.org.

In the step S740, the WLAN-AN routes the EAP response/identity message towards the NSWOF/AAA server over the SWa interface based on the CHrealm part of the extended NAI.

In some embodiments, the step S740 may be step S740a. In step S740a, the WLAN-AN may send a SWa protocol message to the NSWOF in the PLMN. The SWa protocol message is a message from the SWa interface. Through the SWa protocol message, the WLAN-AN can send the EAP response/identity message (and SUCI) to the NSWOF in the PLMN.

In some embodiments, the step S740 may be step S740b. In the step S740b, the WLAN-AN may send the SWa protocol message to the NSWOF in the NPN. The SWa protocol message is a message from the SWa interface. Through the SWa protocol message, the WLAN-AN may send the EAP response/identity message (and SUCI) to the NSWOF in the NPN.

In some embodiments, the step S740 may be step S740c. In the step S740c, the WLAN-AN may send the SWa protocol message to the AAA server. The SWa protocol message is a message from the SWa interface. Through the SWa protocol message, the WLAN-AN may send the EAP response/identity message (and SUCI) to the AAA server.

In the step S750, a mutual authentication procedure is performed between the UE and the credential holder.

In some embodiments, the step S750 may be step S750a. In the step S750a, the UE and the WLAN-AN can continue to perform the mutual authentication procedure through the NSWOF in the PLMN.

In some embodiments, the step S750 may be step S750b. In the step S750b, the UE and the WLAN-AN can continue to perform the mutual authentication procedure through the NSWOF in the NPN.

In some embodiments, step S750 may be step S750c. In the step S750c, the UE and the WLAN-AN can continue to perform the mutual authentication procedure through the AAA server.

The communication method involved in embodiments of the present disclosure may include at least one of steps S710 to S750. For example, step S730 may be implemented as an independent embodiment. For example, step S730 combined with step S720 may be implemented as an independent embodiment, step S730 combined with steps S710 and S720 may be implemented as an independent embodiment, and step S930 combined with steps S740 and S750 may be implemented as an independent embodiment, but is not limited thereto.

In some embodiments, steps S710 and S720 are optional, and one or more of these steps may be omitted or substituted in different embodiments.

In some embodiments, steps S740 and S750 are optional, and one or more of these steps may be omitted or substituted in different embodiments.

In some embodiments, steps S710, S720, S740 and S750 are optional, and one or more of these steps may be omitted or substituted in different embodiments.

In embodiments of the present disclosure, some or all of the steps and their implementations may be arbitrarily combined with some or all of the steps in other embodiments, or may be arbitrarily combined with implementations in other embodiments.

Embodiments of the present disclosure also provide a communication apparatus for implementing any of the above methods, for example, the embodiments of the present disclosure provide an apparatus. The above apparatus includes a unit or module for implementing each step performed by the terminal in any of the above methods. For another example, another apparatus is provided, including a unit or module for implementing each step performed by the network device (for example, the access network device) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuit. The above hardware circuit may be understood as one or more processors; for example, in one implementation, the hardware circuit is an application-specific integrated circuit (ASIC), and the functions of some or all of the above units or modules may be implemented by designing the logical relationship of the components in the circuit; for another example, in another implementation, the above hardware circuit may be implemented by a programmable logic device (PLD), and a Field Programmable Gate Array (FPGA) may be used as an example, which may include a large number of logic gate circuits, and the connection relationship between the logic gate circuits may be configured by the configuration file, thereby implementing the functions of some or all of the above units or modules. All units or modules of the above apparatus may be implemented in the form of software called by the processor, or in the form of hardware circuits, or in the form of software called by the processor, and the remaining part may be implemented in the form of hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as an ASIC, such as a neural network processing unit (NPU), a tensor processing unit (TPU), a deep learning processing unit (DPU), etc.

FIG. 8 is a schematic structural diagram of a communication apparatus provided according to an embodiment of the present disclosure. The communication apparatus 800 is provided in the terminal 101. As shown in FIG. 8, the communication apparatus 800 may include at least one of a sending module 801 and a receiving module 802.

In some embodiments, the sending module 801 may be configured to send a first NAI to the network device 102. In some embodiments, the sending module 801 may be configured to perform at least one of the sending-related steps (e.g., steps S320, S420, S610, and S730) performed by the terminal 101 in any of the above methods.

In some embodiments, the receiving module 802 may be configured to receive third information from the network device 102. In some embodiments, the receiving module 802 may be configured to perform at least one of the receiving-related steps (e.g., steps S310, S410, and S720) performed by the terminal 101 in any of the above methods.

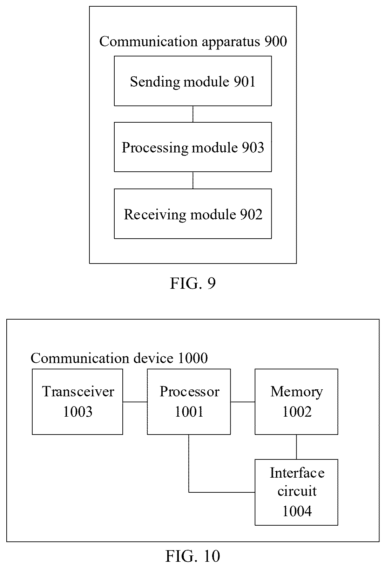

FIG. 9 is a schematic structural diagram of a communication apparatus provided according to an embodiment of the present disclosure. The communication apparatus 900 is provided in the network device 102. As shown in FIG. 9, the communication apparatus 900 may include at least one of a sending module 901, a receiving module 902, and a processing module 903.

In some embodiments, the sending module 901 can be configured to send third information to the terminal 101. In some embodiments, the sending module 901 can be configured to send a second NAI. In some embodiments, the sending module 901 can be configured to perform at least one of the sending-related steps (e.g., steps S310, S510, S720, and S740) performed by the network device 102 in any of the above methods.

In some embodiments, the receiving module 902 may be configured to receive a first NAI from the terminal 101. In some embodiments, the receiving module 902 may be configured to perform at least one of the receiving-related steps (e.g., steps S320, S520, S610, and S730) performed by the network device 102 in any of the above methods.

In some embodiments, the processing module 903 may be configured to generate a second NAI. In some embodiments, the processing module 903 may be configured to perform at least one of the generation-related steps (e.g., steps S330, S530 and S740) performed by the network device 102 in any of the above methods.

FIG. 10 is a schematic structural diagram of a communication device provided according to an embodiment of the present disclosure. The communication device 1000 may be a network device (e.g., an access network device or a core network device, etc.), or a terminal (e.g., a user equipment, etc.), or a chip, a chip system, or a processor, etc. that supports a network device to implement any of the above methods, or a chip, a chip system, or a processor, etc. that supports a terminal to implement any of the above communication methods. The communication device 1000 may be used to implement the communication method described in the above method embodiments, and the details may refer to the description in the above method embodiments.

As shown in FIG. 10, the communication device 1000 includes one or more processors 1001. The processor 1001 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. The processor 1001 is used to call instructions so that the communication device 1000 performs any of the above communication methods.

In some embodiments, the communication device 1000 further includes one or more memories 1002 for storing instructions. In some embodiments, all or part of the memory 1002 may also be outside the communication device 1000.

In some embodiments, the communication device 1000 further includes one or more transceivers 1003. When the communication device 1000 includes one or more transceivers 1003, the communication steps such as sending and receiving in the above method are performed by the transceiver 1003, and the other steps are performed by the processor 1001.

In some embodiments, the transceiver may include a receiver and a transmitter, and the receiver and the transmitter may be separate or integrated. In some embodiments, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

In some embodiments, the communication device 1000 further includes one or more interface circuits 1004, which are connected to the memory 1002. The interface circuit 1004 can be used to receive signals from the memory 1002 or other apparatuses, and can be used to send signals to the memory 1002 or other apparatuses. For example, the interface circuit 1004 can read instructions stored in the memory 1002 and send the instructions to the processor 1001.

The communication device 1000 described in the above embodiments may be a network device or a terminal, but the scope of the communication device 1000 described in the present disclosure is not limited thereto, and the structure of the communication device 1000 may not be limited by FIG. 10. The communication device may be an independent device or may be part of a relatively large device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

The present disclosure also provides a storage medium, on which instructions are stored, and when the instructions are executed on the communication device 1000, the communication device 1000 executes any of the above communication methods. In some embodiments, the storage medium is an electronic storage medium. In some embodiments, the storage medium is a computer-readable storage medium, but it can also be a storage medium readable by other apparatuses. In some embodiments, the storage medium can be a non-transitory storage medium, but it can also be a temporary storage medium.

The present disclosure also provides a program product, and when the program product is executed by the communication device 1000, the communication device 1000 executes any one of the above communication methods. In some embodiments, the program product may be a computer program product.

The present disclosure also provides a computer program, which, when executed on a computer, enables the computer to execute any one of the above communication methods.

Other implementations of the present disclosure may be readily thought of by those skilled in the art after considering the specification and practicing the contents disclosed herein. The present disclosure is intended to cover any variations, uses, or adaptations of the present disclosure, which follow the general principles of the present disclosure and include common knowledge or customary technical means in the technical field that are not disclosed in the present disclosure. The specification and embodiments are to be considered as exemplary only, and the true scope and spirit of the present disclosure are indicated by the following claims.

It should be understood that the present disclosure is not limited to the exact construction that has been described above and shown in the drawings and that various modifications and changes may be made without departing from the scope thereof. The scope of the present disclosure is limited only by the appended claims.

## Claims

1. A communication method, performed by a terminal and comprising:
sending a first Network Access Identifier (NAI) to a network device;
wherein the first NAI comprises first information and second information, the first information is configured to indicate a first realm corresponding to the network device, the second information is configured to indicate a second realm corresponding to a credential holder of the terminal, and the first realm is a Non-Public Network (NPN).

2. The method according to claim 1, wherein the second realm is one of the following types:
a Public Land Mobile Network (PLMN);
an NPN; or
a realm to which an Authentication, Authorization and Accounting (AAA) server belongs.

3. The method according to claim 1 or 2, wherein the first NAI satisfies the following format:
CHrealm! username@NPNrealm;
where CHrealm represents the second information, username represents a username, NPNrealm represents the first information, and CHrealm, username and NPNrealm are separated by ! and @.

4. The method according to any one of claims 1 to 3, wherein the first information comprises a first Network Identifier (NID), a first Mobile Network Code (MNC) and a first Mobile Country Code (MCC) of the first realm.

5. The method according to any one of claims 1 to 4, wherein the second realm is a PLMN; and
the second information comprises a second MNC and a second MCC of the second realm.

6. The method according to any one of claims 1 to 5, wherein the second realm is a PLMN; and
the second information satisfies the following format:
Sgc-nswo.mnc<chMNC>.mcc<chMCC>.3gppnetwork.org;
where 5gc-nswo is a non-seamless wireless local area network offload (NSWO) tag, mnc<chMNC> is configured to indicate a second MNC of the second realm, mcc<chMCC> is configured to indicate a second MCC of the second realm, and 3gppnetwork.org is a domain name.

7. The method according to any one of claims 1 to 6, wherein the second realm is a PLMN; and
the first NAI satisfies the following format:
5gc-nswo.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org;
where 5gc-nswo is a NSWO tag, 3gppnetwork.org is a domain name, username is configured to indicate a username in a Subscription Concealed Identifier (SUCI), mnc<chMNC> is configured to indicate a second MNC of the second realm, mcc<chMCC> is configured to indicate a second MCC of the second realm, nid<NID> is configured to indicate a first NID of the first realm, mnc<servingMNC> is configured to indicate a first MNC of the first realm, and mcc<servingMCC> is configured to indicate a first MCC of the first realm.

8. The method according to any one of claims 1 to 4, wherein the second realm is an NPN; and
the second information comprises a second NID, a second MNC and a second MCC of the second realm.

9. The method according to any one of claims 1-4 and 8, wherein the second realm is an NPN; and
the second information satisfies the following format:
5gc-nswo.nid<chNID>.mnc<chMNC>.mcc<chMCC>.3gppnetwork.org;
where 5gc-nswo is a NSWO tag, nid<NID> is configured to indicate a second NID of the second realm, mnc<chMNC> is configured to indicate a second MNC of the second realm, mcc<chMCC> is configured to indicate a second MCC of the second realm, and 3gppnetwork.org is a domain name.

10. The method according to any one of claims 1-4 and 8-9, wherein the second realm is an NPN; and
the first NAI satisfies the following format:
5gc-nswo.nid<chNID>.mnc<chMNC>.mcc<chMCC>.3gppnetwork.org!<username of SUCI in NAI format>@5gc-nswo.nid<servingNID>.mnc<servingMNC>.mcc<servingMCC>.3gppnetwork.org;
where 5gc-nswo is a NSWO tag, 3gppnetwork.org is a domain name, username is configured to indicate a username in a SUCI, nid<chNID> is configured to indicate a second NID of the second realm, mnc<chMNC> is configured to indicate a second MNC of the second realm, mcc<chMCC> is configured to indicate a second MCC of the second realm, nid<servingNID> is configured to indicate a first NID of the first realm, mnc<servingMNC> is configured to indicate a first MNC of the first realm, and mcc<servingMCC> is configured to indicate a first MCC of the first realm.

11. The method according to any one of claims 1 to 4, wherein the second realm is a realm to which an AAA server belongs; and
the second information comprises indication information of the realm to which the AAA server belongs.

12. The method according to any one of claims 1-4 and 11, wherein the second realm is an AAA server; and
the second information satisfies the following format:
5gc-nswo.AAArealm;
where 5gc-nswo is a NSWO tag, and AAArealm is indication information of a realm to which the AAA server belongs.

13. The method according to any one of claims 1-4 and 11-12, wherein the second realm is an AAA server; and
the first NAI satisfies the following format:
5gc-nswo.AAArealm!<username of SUCI in NAI format>@5gc-nswo.nid<NID>.mnc<servingMNC>.mcc<servingMCC>.3gppnetwork.org;
where 5gc-nswo is a NSWO tag, 3gppnetwork.org is a domain name, username is configured to indicate a username in a SUCI, AAArealm is indication information of a realm to which the AAA server belongs, nid<NID> is configured to indicate a first NID of the first realm, mnc<servingMNC> is configured to indicate a first MNC of the first realm, and mcc<servingMCC> is configured to indicate a first MCC of the first realm.

14. The method according to any one of claims 11 to 13, wherein the indication information of the realm to which the AAA server belongs comprises a Fully Qualified Domain Name (FQDN) of the AAA server.

15. The method according to any one of claims 1 to 14, wherein the first NAI is carried in an Extended Authentication Protocol (EAP) response/identity message.

16. The method according to any one of claims 1 to 15, wherein before sending the first NAI to the network device, the method further comprises:
receiving third information from the network device, wherein the third information is used by the terminal to determine an NAI format of the first NAI.

17. The method according to claim 16, wherein the third information is carried in an EAP identity/request message.

18. The method according to any one of claims 1 to 17, wherein the network device is located in a Wireless Local Area Network Access Network (WLAN-AN).

19. A communication method, performed by a network device, and comprising:
receiving a first Network Access Identifier (NAI) from a terminal;
wherein the first NAI comprises first information and second information, the first information is configured to indicate a first realm corresponding to the network device, the second information is configured to indicate a second realm corresponding to a credential holder of the terminal, and the first realm is a Non-Public Network (NPN).

20. The method according to claim 19, wherein the second realm is one of the following types:
a Public Land Mobile Network (PLMN);
an NPN; or
a realm to which an Authentication, Authorization and Accounting (AAA) server belongs.

21. The method according to claim 19 or 20, wherein the first NAI satisfies the following format:
CHrealm! username@NPNrealm;
where CHrealm represents the second information, username represents a username, NPNrealm represents the first information, and CHrealm, username and NPNrealm are separated by ! and @.

22. The method according to any one of claims 19 to 21, wherein the first information comprises a first Network Identifier (NID), a first Mobile Network Code (MNC) and a first Mobile Country Code (MCC) of the first realm.

23. The method according to any one of claims 19 to 22, wherein the second realm is a PLMN; and
the second information comprises a second MNC and a second MCC of the second realm.

24. The method according to any one of claims 19 to 23, wherein the second realm is a PLMN; and
the second information satisfies the following format:
5gc-nswo.mnc<chMNC>.mcc<chMCC>.3gppnetwork.org;
where 5gc-nswo is a non-seamless wireless local area network offload (NSWO) tag, mnc<chMNC> is configured to indicate a second MNC of the second realm, mcc<chMCC> is configured to indicate a second MCC of the second realm, and 3gppnetwork.org is a domain name.

25. The method according to any one of claims 19 to 24, wherein the second realm is a PLMN; and
the first NAI satisfies the following format:
Sgc-nswo.mnc<chMNC>.mcc<chMCC>.3gppnetwork.org!<username of SUCI in NAI format>@5gc-nswo.nid<NID>.mnc<servingMNC>.mcc<servingMCC>.3gppnetwork.org;
where 5gc-nswo is a NSWO tag, 3gppnetwork.org is a domain name, username is configured to indicate a username in a Subscription Concealed Identifier (SUCI), mnc<chMNC> is configured to indicate a second MNC of the second realm, mcc<chMCC> is configured to indicate a second MCC of the second realm, nid<NID> is configured to indicate a first NID of the first realm, mnc<servingMNC> is configured to indicate a first MNC of the first realm, and mcc<servingMCC> is configured to indicate a first MCC of the first realm.

26. The method according to any one of claims 19 to 22, wherein the second realm is an NPN; and
the second information comprises a second NID, a second MNC and a second MCC of the second realm.

27. The method according to any one of claims 19 to 22 and 26, wherein the second realm is an NPN; and
the second information satisfies the following format:
5gc-nswo.nid<chNID>.mnc<chMNC>.mcc<chMCC>.3gppnetwork.org;
where 5gc-nswo is a NSWO tag, nid<chNID> is configured to indicate a second NID of the second realm, mnc<chMNC> is configured to indicate a second MNC of the second realm, mcc<chMCC> is configured to indicate a second MCC of the second realm, and 3gppnetwork.org is a domain name.

28. The method according to any one of claims 19 to 22 and 26 to 27, wherein the second realm is an NPN; and
the first NAI satisfies the following format:
5gc-nswo.nid<chNID>.mnc<chMNC>.mcc<chMCC>.3gppnetwork.org!<username of SUCI in NAI format>@5gc-nswo.nid<servingNID>.mnc<servingMNC>.mcc<servingMCC>.3gppnetwork.org;
where 5gc-nswo is a NSWO tag, 3gppnetwork.org is a domain name, username is configured to indicate a username in a SUCI, nid<chNID> is configured to indicate a second NID of the second realm, mnc<chMNC> is configured to indicate a second MNC of the second realm, mcc<chMCC> is configured to indicate a second MCC of the second realm, nid<servingNID> is configured to indicate a first NID of the first realm, mnc<servingMNC> is configured to indicate a first MNC of the first realm, and mcc<servingMCC> is configured to indicate a first MCC of the first realm.

29. The method according to any one of claims 19 to 22, wherein the second realm is a realm to which an AAA server belongs; and
the second information comprises indication information of the realm to which the AAA server belongs.

30. The method according to any one of claims 19 to 22 and 29, wherein the second realm is an AAA server; and
the second information satisfies the following format:
5gc-nswo.AAArealm;
where 5gc-nswo is a NSWO tag, and AAArealm is indication information of a realm to which the AAA server belongs.

31. The method according to any one of claims 19 to 22 and 29 to 30, wherein the second realm is an AAA server; and
the first NAI satisfies the following format:
5gc-nswo.AAArealm!<usemame of SUCI in NAI format>@5gc-nswo.nid<NID>.mnc<servingMNC>.mcc<servingMCC>.3gppnetwork.org;
where 5gc-nswo is a NSWO tag, 3gppnetwork.org is a domain name, username is configured to indicate a username in a SUCI, AAArealm is indication information of a realm to which the AAA server belongs, nid<NID> is configured to indicate a first NID of the first realm, mnc<servingMNC> is configured to indicate a first MNC of the first realm, and mcc<servingMCC> is configured to indicate a first MCC of the first realm.

32. The method according to any one of claims 29 to 31, wherein the indication information of the realm to which the AAA server belongs comprises a Fully Qualified Domain Name (FQDN) of the AAA server.

33. The method according to any one of claims 19 to 32, wherein the first NAI is carried in an Extended Authentication Protocol (EAP) response/identity message.

34. The method according to any one of claims 19 to 33, wherein before receiving the first NAI from the terminal, the method further comprises:
sending third information to the terminal, wherein the third information is used by the terminal to determine an NAI format of the first NAI.

35. The method according to claim 34, wherein the third information is carried in an EAP identity/request message.

36. The method according to any one of claims 19 to 35, wherein after receiving the first NAI from the terminal, the method further comprises:
generating a second NAI based on the first NAI, wherein the second NAI is generated based on removing the first information from the first NAI.

37. The method according to any one of claims 19 to 36, wherein the network device is located in a Wireless Local Area Network Access Network (WLAN-AN).

38. The method according to claim 36 or 37, wherein after generating the second NAI based on the first NAI, the method further comprises:
sending the second NAI to a non-seamless wireless local area network offload function (NSWOF) or an AAA server corresponding to the credential holder.

39. A communication apparatus, provided in a terminal and comprising:
a sending module, configured to send a first Network Access Identifier (NAI) to a network device;
wherein the first NAI comprises first information and second information, the first information is configured to indicate a first realm corresponding to the network device, the second information is configured to indicate a second realm corresponding to a credential holder of the terminal, and the first realm is a Non-Public Network (NPN).

40. A communication apparatus, provided in a network device, and comprising:
a receiving module, configured to receive a first Network Access Identifier (NAI) from a terminal;
wherein the first NAI comprises first information and second information, the first information is configured to indicate a first realm corresponding to the network device, the second information is configured to indicate a second realm corresponding to a credential holder of the terminal, and the first realm is a Non-Public Network (NPN).

41. A communication device, comprising:
at least one processor;
wherein the processor is configured to invoke instructions to execute the communication method according to any one of claims 1 to 38.

42. A communication system, comprising a terminal and a network device, wherein the terminal is configured to implement the communication method according to any one of claims 1 to 18, and the network device is configured to implement the communication method according to any one of claims 19 to 38.

43. A storage medium having instructions stored, wherein the instructions, when executed by a processor, perform the communication method according to any one of claims 1 to 38.
